(19) Europäisches Patentamt
European Patent Office
Office européen des brevets

(11) Publication number: 0 233 164 B1

# (12) EUROPEAN PATENT SPECIFICATION

(45) Date of publication of the patent specification: 18.04.90

(51) Int. Cl.[4]: A01N 43/90 // (A01N43/90, 37:06, 31:06, 31:02, 27:00)

(21) Application number: 87850032.1

(22) Date of filing: 02.02.87

## (54) A method and composition for observation and control of pityogenes chalcographus.

(30) Priority: 03.02.86 SE 8600448
06.10.86 SE 8604231

(43) Date of publication of application: 19.08.87 Bulletin 87/34

(45) Publication of the grant of the patent: 18.04.90 Bulletin 90/16

(84) Designated Contracting States: AT BE CH DE FR GB IT LI NL SE

(56) References cited: US-A- 4 205 084

(73) Proprietor: SHELL INTERNATIONALE RESEARCH MAATSCHAPPIJ B.V., Carel van Bylandtlaan 30, NL-2596 HR Den Haag(NL)

(72) Inventor: Lofqvist, Jan, Murarevägen 18, S-222 30 Lund(SE)
Inventor: Birgersson, Göran, Fjärde Langgatan 25, S-413 27 Göteborg(SE)
Inventor: Byers, John, Ekologihuset Helgonavagen 5, S-223 62 Lund(SE)
Inventor: Bergström, Gunnar, Sanatoriegatan 4C, S-416 53 Göteborg(SE)

EP 0 233 164 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

ACTORUM AG

## Description

The present invention relates to a method for observation and control of the six-spined bark beetle, Pityogenes chalcographus, and the invention also relates to a composition for this.

The interest in biological methods for the control of insect pests has been intensified during the last 10 years or more, and particularly so the interest in the use of the so-called pheromones, ie the characteristic scent substances through which animal species, such as insects, communicate and which initiate a behavioural response or a biological activity. Some pheromones for control of pest insects have also been commercially available for several years now. The advantages of using pheromones for this purpose is their high selectivity, from which follows that they do not affect the environment. In contrast to conventional chemical pesticides the activity of pheromones for this purpose is directed almost entirely to the specific insect pest, and as pheromones are naturally occuring substances they do not give rise to resistance problems. Pheromones are active in extremely small quantities and they are biologically degradable.

One area in which the use of pheromones is of particular importance is the control of forest insect pests as costly forest losses are suffered each year due to attacks of insects, both in the form of direct damages, where the trees are killed, and in the form of losses in growth and increment, which show up in the long run.

The six-spined bark beetle attacks spruce, Picea abies, and can give rise to serious damage. Like most bark beetles it breeds in the nutritious phloem between the bark and the wood. For the six-spined bark beetle the male is the first to attack and boring in he releases aggregation pheromones which attract both sexes. The attraction of further males helps him to break down the resistance of the tree in the form of an abundant flow of resin. When the male has excavated a nuptial chamber a female is allowed into this and after mating the laying of eggs starts and the first female is followed by several others.

Through the US patent 4205084 it is previously known that the chemical compound 2-ethyl-1,6-dioxaspiro[4.4]nonane, with the trivial name chalcogran, attracts bark beetles of the order Pityogenes chalcographus and can be used for selective control of these. However, the attracting effect of chalcogran is not sufficient for the substance to be used alone as an efficient control compound for Pityogenes chalcographus.

According to the present invention it has been found that the methyl ester of 2,4-decadienoic acid in combination with chalcogran has a very good attracting effect on individuals of both sexes of Pityogenes chalcographus and the combination can thus be used for efficient observation and control of Pityogenes chalcographus.

Methyl-2,4-decadienoate

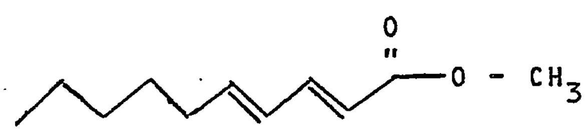

is a per se known compound which among other things occurs naturally as aromatic compound in pears. The methyl ester of 2,4-decadienoic acid can eg be prepared according to the process disclosed by L. Crombie in J. Chem. Soc. 1955, 1007.

The present invention thus relates to a method of observing and controlling Pityogenes chalcographus using known techniques for observation and control of insects according to which traps are baited with attracting substances or according to which attracting substances are emitted over areas to cause confusion and distort the normal behaviour of the insects whereby the attractant comprises a combination of methyl-2,4-decadienoate and chalcogran.

Attractant pheromones can be used for control of insects according to three methods:

1) for observing and monitoring the population
2) for direct control by trapping
3) for direct control by confusion

According to the present invention methyl-2,4-decadienoate in combination with chalcogran can be used for control of Pityogenes chalcographus according to any of the above methods. According to the first method traps baited with the attractant are used. Males and females are then attracted to the traps and the catch gives information on the presence of the insect and the population density, information which can then be used to determine the appropriate moment for use of conventional pesticides and the amounts required to avoid overdosage. According to the second method baited traps are also used but in this case they are employed for direct killing of the trapped insects. Trap catching is according to the invention also used for the concenctration of the attack of bark beetles to selected trees in a tree stand which have been treated with the active attractant combination according to the invention and which

trees attract the bark beetles. When the beetles have killed selected trees and the egg production is finished the trees can be felled and the production of larvae destroyed by barking.

As has been indicated above pheromones are active in very small quantities and the combinations of the invention are thus suitably used in some type of composition or with some technique which allows slow release and preferably controlled release. Compositions comprising solid or liquid carriers can be utilized, eg water, acetone, organic solvents, different mineral oils and vegetable oils, talcum, silica and different plastic materials. The substances can further be incorporated in a tablet or capsule or some other kind of dispenser which permits slow release.

The effect of the combination qf the methyl ester of 2,4-decadienoic acid and chalcogran can be further improved by addition of substances from the groups terpenes, terpene alcohols, lower aliphatic and cycloaliphatic alcohols with 2 to 6 carbon atoms as well as by the addition of per se known pheromones. As examples of such effect improving substances can be mentioned, alpha- and betapinene, camphene, alphaterpinene, terpinols, alpha-terpineol, terpinen-4-ol, thujanol, ethanol, 2-methylbutan-2-ol, 1-hexanol, cyclohexanol, 2-methyl-3-buten-2-ol, 2-metylbutyne-2-ol, ipsdienol, cis-verbenol and ipsenol. It is particularly preferred to use the combination of the ester and chalcogran in further combination with one or several monoterpenes, particularly -beta-pinene, +alpha-pinene, -alpha-pinene and camphene. Another preferred addition to the combination is the lower alcohol methyl-butenol, which may be replaced by methylbutanol or methylbutynol, which acts as a solvent and which is preferably used with combinations of chalcogran, the methyl ester and cis-verbenol.

According to the invention methyl-2,4-decadienoate is used in combination with chalcogran and a substantially increased effect in the attraction of Pityogenes chalcographus is obtained compared with the use of solely chalcogran. Chalcogran exists in several isomeric forms and is used in the form of any of these or as a racemate, as previously known. In the same manner methyl-2,4-decadienoate can be used as a racemate or in the form of one or several of its four isomers. The combination shall contain effective amounts of the respective substances for the desired attraction and in the combination the weight ratio of methyl-2,4-decadienoate to chalcogran is suitably within the range of from 1:10000 to 100:1 and preferably within the range of from 1:100 to 50:1. It is usually suitable to have almost the same amounts of the two substances or more of chalcogran than of the ester.

The present invention also relates to a composition for attracting Pityogenes chalcographus which comprises an inert carrier and as active component a combination of methyl-2,4-decadienoate and chalcogran. The weight ratio between the methyl ester and chalcogran in the combination is suitably within the range of from 1:10000 to 100:1 and preferably within the range of from 1:100 to 50:1.

Further embodiments of the compositions according to the invention comprise, besides the combination of chalcogran and the methyl ester, additional substances from the groups terpenes, terpene alcohols, lower alcohols and pheromones as disclosed above.

The method and the composition according to the invention are based on the attractant effect of the combination of methyl-2,4-decadienoate and chalcogran. A racemate or one or several of the possible isomers of the methyl ester can be used. A certain improvement of the effect seems to be obtained with the trans-cis isomer and thus it is especially preferred to use this in the method and the composition of the invention.

The invention is further illustrated in the following examples, which, however, are not intended to limit the same.

Example 1

The attracting effect of methyl-2,4-decadienoate in combination with chalcogran was investigated in a laboratory test. In this test a laminar air flow with a speed of 2 m/sec was created over an area covered by filter paper. A capillary with the substances was placed upwind. The bark betlees were released 10 at a time 14 cm downwind from the capillary. Those which walking orient themselves within a circle having a radius of 1.5 cm out from the capillary are considered as having given a positive response to the attractant. The method is further described by Byers, J.A. and Wood, D.: J. Chem. Ecol. 7:9-18, 1981.

The results of a test series carried out with the given technique is shown in the Table. It is evident that the combination of methyl-2,4-decadienoate and chalcogran in corresponding amounts attracts 70% of the females and 40% of the males while the methyl ester alone or chalcogran alone at the most attracts 10% of the insects.

Table

Attraction of Pityogenes chalcographus to an attractant consisting of methyl-2,4-decadienoate in combination with chalcogran.

| Stimulus[1)] | Total number of insects | % response |
|---|---|---|
| $10^{-9}$ g Me-ester/µl + $10^{-8}$ g chalcogran/µl | 30 females<br>30 males | 40<br>30 |
| $10^{-8}$ g Me-ester/µl + $10^{-8}$ g chalcogran/µl | 40 females<br>40 males | 70<br>40 |
| $10^{-9}$ g Me-ester/µl | 30 females | 6.6 |
| $10^{-9}$ g Me-ester/µl | 30 males | 6.6 |
| $10^{-8}$ g Me-ester/µl | 30 females | 6.6 |
| $10^{-9}$ g chalcogran/µl | 30 females | 10 |
| $10^{-8}$ g chalcogran/µl | 30 females | 10 |
| $10^{-8}$ g chalcogran/µl | 30 males | 6.6 |

1) The absolute amount = 2.2 g/min times the given values.

Examples 2 - 5

Examples 2 to 5 give the results of field tests in spruce forests at different locations and thus with varying populations of Pityogenes chalcographus. Tubular traps were baited with the respective active substances and placed between the trees. The results are given as number of trapped insects.

Field test 2

| Substances | Result |
|---|---|
| chalcogran | 25 |
| chalcogran + Me-ester | 800 |

When chalcogran was used alone the traps were baited with 100 mg of chalcogran and for the combination the traps were baited with 100 mg of chalcogran and 100 mg of the ester.

Field test 3

| Substances | Result |
|---|---|
| chalcogran + Me-ester | 100 |
| chalcogran + Me-ester + mixture of monoterpenes | 750 |

The mixture of terpenes comprised -beta-pinene, +alpha-pinene, -alpha-pinene and camphene. The traps were baited with 100 mg chalcogran, 100 mg methyl ester and 4x10000 mg of the terpenes.

Field test 4

| Substances | Result |
|---|---|
| chalcogran + Me-ester | 700 |
| chalcogran + Me-ester + –beta-pinene | 1700 |
| chalcogran + Me-ester + +alpha-pinene | 850 |
| chalcogran + Me-ester –alpha-pinene | 2250 |
| chalcogran + Me-ester +camphene | 800 |

The traps were baited with 100 mg of chalcogran, 100 mg of the methyl ester and 10000 mg of the respective terpene.

Field test 5

| Substances | Result |
|---|---|
| chalcogran + Me-ester | 700 |
| chalcogran + Me-ester + 2-methyl-3-buten-2-ol + cis-verbenol | 1400 |

The traps were baited with 100 mg chalcogran, 100 mg methyl ester and for the second composition 1500 mg of 2-methyl-3-butene-2-ol and 100 mg cis-verbenol.

## Claims

1. A method of observing and controlling Pityogenes chalcographus using known techniques for observation and control of insects according to which traps are baited with attracting substances or according to which attracting substances are emitted over areas to cause confusion and distort the normal behaviour of the insects, characterized in that the attractant comprises a combination of methyl-2,4-decadienoate and chalcogran (2-ethyl-1,6-dioxaspiro[4.4]nonane).
2. A method according to claim 1, characterized in that the attractant further comprises one or several monoterpenes.
3. A method according to claim 2, characterized in that the monoterpene is -beta-pinene, +alpha-pinene, -alpha-pinene and/or camphene.
4. A method according to claim 1, characterized in that the attractant further comprises cis-verbenol and 2-methyl-3-butene-2-ol.
5. A composition suitable for observation and control of Pityogenes chalcographus comprising an inert carrier, characterized in that it as active ingredient contains a combination of methyl-2,4-decadienoate and chalcogran.
6. A composition according to claim 5, characterized in that the weight ratio of methyl-2,4-decadienoate to chalcogran is within the range of from 1:10000 to 100:1.
7. A composition according to claim 5 or 6, characterized in that it further comprises one or several monoterpenes.
8. A composition according to claim 7, characterized in that the monoterpene is -beta-pinene, +alpha-pinene, -alpha-pinene and/or camphene.
9. A composition according to any of claims 5 to 8, characterized in that it further comprises cis-verbenol and 2-methyl-3-butene-2-ol.

## Patentansprüche

1. Eine Methode der Beobachtung und Bekämpfung von Pityogenes chalographus unter Verwendung bekannter Insektenbeobachtungs- und Bekämpfungstechniken, gemäß der Fallen mit Lockmitteln versehen oder Lockmittel über Flächen verbreitet werden, um Verwirrung zu verursachen und das normale Verhalten der Insekten zu stören und die dadurch gekennzeichnet ist, daß das Lockmittel ein Gemisch aus Methyl-2,4-decadienoat und Chalcogran (2-Äthyl-1,6-Dioxaspiro (4,4)-Nonan) enthält.

2. Eine Methode gemäß Anspruch 1, die dadurch gekennzeichnet ist, daß das Lockmittel darüberhinaus ein oder mehrere Monoterpene enthält.

3. Eine Methode gemäß Anspruch 2, die dadurch gekennzeichnet ist, daß es sich bei den Monoterpenen um -ß-Pinen, +α-Pinen, -α-Pinen und/oder Camphen handelt.

4. Eine Methode gemäß Anspruch 1, die dadurch gekennzeichnet ist, daß das Lockmittel darüberhinaus cis-Verbenol und 2-Methyl-3-buten-2-ol enthält.

5. Eine für die Beobachtung und Bekämpfung von Pityogenes chalcographus geeignete Zusammensetzung, die auf einer passiven Trägersubstanz beruht und dadurch gekennzeichnet ist, daß sie als aktiven Bestandteil ein Gemisch aus Methyl-2,4-decadienoat und Chalcogran enthält.

6. Eine Zusammensetzung gemäß Anspruch 5, die dadurch gekennzeichnet ist, daß das Gewichtsverhältnis von Methyl-2,4-decadienoat zu Chalcogran zwischen 1:10000 und 100:1 liegt.

7. Eine Zusammensetzung gemäß Anspruch 5 oder 6, die dadurch gekennzeichnet ist, daß sie darüberhinaus eines oder mehrere Monoterpene enthält.

8. Eine Zusammensetzung gemäß Anspruch 7, die dadurch gekennzeichnet ist, daß es sich bei den Monoterpenen um -ß-Pinen, +α-Pinen, -α-Pinen und/oder Camphen handelt.

9. Eine Zusammensetzung gemäß Ansprüchen 5 bis 8, die dadurch gekennzeichnet ist, daß sie darüberhinaus cis-Verbenol und 2-Methyl-3-buten-2-ol enthält.

## Revendications

1. Une méthode d'observation et de contrôle de Pityogenes chalcographus utilisant des techniques connues d'observation et de contrôle des insectes recourant à la pose de pièges garnis de substances attractrices ou à l'émission de substances attractrices dans des zones d'une certaine étendue pour semer la confusion parmi les insectes et modifier leur comportement normal, ladite méthode étant caractérisée par le fait que l'attractif est un mélange de méthyl-2, 4-décadienoate et de chalcogran (2-éthyl-1,6-dioxaspiro [4.4]nonane).

2. Une méthode conforme à celle de la revendication 1, caractérisée par le fait que l'attractif contient en plus un ou plusieurs monoterpène (s).

3. Une méthode conforme à celle de la revendication 2, caractérisée par le fait que le monoterpène est un -bêta-pinène, un +alpha-pinène, un -alpha-pinène et/ou du camphène.

4. Une méthode conforme à celle de la revendication 1, caractérisée par le fait que l'attractif contient en plus du cisverbenol et du 2-méthyl-3-butène-2-ol.

5. Une composition qui convient à l'observation et au contrôle de Pityogenes chalcographus contenant un porteur inerte et caractérisée par le fait qu'elle contient, comme matière active, un mélange de méthyl-2, 4-décadieonate et de chalcogran.

6. Une composition conforme à celle de la revendication 5, caractérisée par un rapport de poids entre le méthyl-2, 4-décadienoate et le chalcogran dans la plage de 1:10000 à 100:1.

7. Une composition conforme à celle des revendications 5 ou 6, caractérisée par le fait qu'elle contient en plus un ou plusieurs monoterpène (s).

8. Une composition conforme à celle de la revendication 7, caractérisée par le fait que le monoterpène est un -bêta-pinène, un +alpha-pinène, un -alpha-pinène et/ou du camphène.

9. Une composition conforme à l'une des revendications 5 à 8, caractérisée par le fait qu'elle contient en plus du cis-verbenol et du 2-méthyl-3-butène-2-ol.